# EUROPÄISCHE PATENTANMELDUNG

(11) **EP 1 369 343 A2**
(43) Veröffentlichungstag der Anmeldung: **10.12.2003**
(21) Anmeldenummer: 03011316.1
(22) Anmeldetag: 19.05.2003
(51) Int. Cl.: B62D 65/00

(54) **Verfahren und Fertigungslinie zum Fügen von Karosseriebaugruppen**

(30) Priorität: 06.06.2002 AT 8602002
(71) Anmelder: TMS Produktionssysteme GmbH, A-4031 Linz (AT)
(72) Erfinder: Schupp, Gerhard, 86316 Friedberg 2 (DE)
(74) Vertreter: VA TECH Patente GmbH & Co

(57) **Zusammenfassung**

In bisher bekannten herkömmlichen Fertigungslinien zur Herstellung von Rohkarosserien werden im Wesentlichen in einer Fertigungslinie sequentiell zuerst Bodenbaugruppen mit Seitenwandbaugruppen gefügt und erst im Anschluss daran werden die Dachbaugruppen zur Komplettierung der Rohkarosserie gefügt. Moderne Fügeverfahren, wie. z.B. beim Laseroder Plasmaschweißen, die verstärkt zum Fügen der Dachbaugruppe auf die Seitenwandbaugruppen eingesetzt werden, sind jedoch sehr Prozesskritische Verfahren, sodass schon kleine Prozessschwankungen zum Totalausfall der Fertigungslinie führen können oder Nachbearbeitungen erforderlich machen. Ein solcher Ausfall wird nun durch die Erfindung dadurch verhindert, dass die Fügereihenfolge umgekehrt wird, indem als Zwischenschritt in der Herstellung einer Rohkarosserie (11) zuerst eine Dachbaugruppe (7) mit zumindest einer Seitenwandbaugruppe (8) zu einer Dach-Seitenwandbaugruppe (9) gefügt wird.

## Beschreibung

Die gegenständliche Anmeldung betrifft ein Verfahren zum Fügen von Karosseriebaugruppen eines Fahrzeuges, sowie eine entsprechende Fertigungslinie zum Fügen von Karosseriebaugruppen eines Fahrzeuges zu einer Rohkarosserie

In herkömmlichen Fertigungslinien zur Herstellung von Rohkarosserien von Fahrzeugen werden zuerst die Seitenwände mit einem Unterbau verbunden und im Anschluss in der Hauptlinie Schritt für Schritt darauf das Dach aufgebaut, also z.B. zuerst die einzelnen Dachträger und dann das Dachelement gefügt. Das Problem dabei ist, dass die Dach-Seitenwand-Fügeverbindungen zunehmend mit prozesskritischen Fügetechniken, wie Laser- oder Plasmaschweißen oder-löten, durchgeführt werden. Bei Prozessstörungen des Fügeprozesses kann es deshalb zum Stillstand der gesamten Hauptlinie kommen, was einen Produktionsausfall im Karosserierohbau bedeutet und mit enormen Kosten verbunden ist. Oder die gefügten Rohkarosserien müssen einen Nachbearbeitungsbereich durchlaufen, was ebenfalls mit hohen Kosten verbunden ist und die Durchlaufzeiten vergrößert.
In der EP 1 149 757 A2 werden nun als teilweise Abhilfe z.B. fertig gefügte Dachbaugruppen in einem Fügevorgang in der Hauptlinie mit vorgefügten Boden-Seitenwandbaugruppen gefügt. Damit wird zumindest die Anzahl der notwendigen Fügevorgänge bzw. -stationen in der Hauptlinie reduziert, wobei sich aber immer noch eine Prozessstörung beim Fügen des Daches auf die halbfertige Rohkarosserie auf den Fertigungsfluss der Hauptlinie auswirken würde.

Die vorliegende Erfindung hat sich deshalb die Aufgabe gestellt ein Verfahren und eine Fertigungslinie anzugeben, bei dem bzw. in der das Fügen des Daches an die Seitewände einer Rohkarosserie keinen Einfluss auf die Herstellung der Rohkarosserie selbst hat.

Diese Aufgabe wird für das Verfahren dadurch gelöst, indem als Zwischenschritt zumindest eine Dachbaugruppe mit zumindest einer Seitenwandbaugruppe pro Längsseite des Fahrzeuges zu einer Dach-Seitenwandbaugruppe gefügt wird und für die Fertigungslinie dadurch, dass zumindest eine Nebenfügestation vorgesehen ist, in der Dachbaugruppen mit Seitenwandbaugruppen zu Dach-Seitenwandbaugruppen fügbar sind.
Damit wird es möglich die prozesskritischen Fügevorgänge vom Fertigfügen der Rohkarosserie abzukoppeln. Sollte es also in der Nebenlinie zum Fügen der Dach-Seitenwandbaugruppen zu Prozessschwankungen kommen, so wirkt sich dass nicht direkt auf das Fügen der fertigen Rohkarosserie aus.

Weitere vorteilhafte Ausführungen und Ausgestaltungen ergeben sich aus den Merkmalen der Unteransprüche.

Die Dach-Seitenwandbaugruppe kann nun im Anschluss mit einer Bodenbaugruppe zu einer Rohkarosserie gefügt wird. Der Fügevorgang der Dach-Seitenwandbaugruppe ist somit völlig entkoppelt vom Fügen der Rohkarosserie, sodass sich Prozessschwankungen bei einem der beiden Fügeprozesse nicht direkt auf den anderen Fügeprozess auswirkt.

Dieses Konzept wird vorteilhaft derart umgesetzt, dass zwei voneinander entkoppelte und unabhängige Fertigungslinien, eine Nebenlinie, zum Fügen der Dach-Seitenwandbaugruppen, und eine Hauptlinie, zum Fügen der Rohkarosserien, vorgesehen werden. Die beiden Linien können bei Bedarf vollständig autonom betrieben werden, ohne dass eine Linie auf die andere Linie Einfluss nimmt, aber es ist natürlich auch möglich bei Bedarf eine gewisse Synchronisation der beiden Linien herbeizuführen.

Eine gefügte Dach-Seitenwandbaugruppe ist eine relativ flexible Struktur, die daher vorteilhaft zum Ausgleichen gewisser Fertigungstoleranzen der Bodengruppe und/oder der Dach-Seitenwandbaugruppen beim Fügen der Rohkarosserien genutzt wird. Die Dach-Seitenwandbaugruppe kann dabei in gewissen Grenzen verformt, z.B. etwas verbogen, werden, um mit der Bodengruppe gefügt werden zu können. Dieser Ausgleich kann auf einfache Weise durch Spannrahmen erzielt werden, die zum Halten bzw. Spannen der Baugruppen in der Fügestation verwendet werden. Der Ausgleich findet dabei automatisch beim Spannen der Baugruppen statt.

Ein besonders hohes Maß an Entkopplung und daher Unabhängigkeit der einzelnen Linien, Neben- und Hauptlinie, wird mittels eines Entkopplungsspeicher erzielt, in dem die gefügten Dach-Seitenwandbaugruppen zwischengespeichert werden können. Kommt es zu Prozessschwankungen in einer Linie so fungiert der Entkopplungsspeicher als Zwischenbuffer, sodass die andere Linie zumindest noch für eine gewisse Zeit normal weiterlaufen kann.

Die Erfindung wird im Folgenden anhand der beispielhaften, schematischen und nicht einschränkenden Figuren 1 bis 4, die ein vorteilhaftes Ausführungsbeispiel zeigen, näher beschrieben. Dabei zeigt
Fig. 1 den erfindungsgemäßen grundsätzlichen Fügeablauf zum Fügen einer Rohkarosserie,
Fig. 2 eine schematische Darstellung des Fügens der Dach- und der Seitenwandbaugruppe,
Fig. 3 eine schematische Darstellung der gefügten der Dach-Seitenwandbaugruppe und
Fig. 4 eine schematische Darstellung des Fügens der Rohkarosserie.

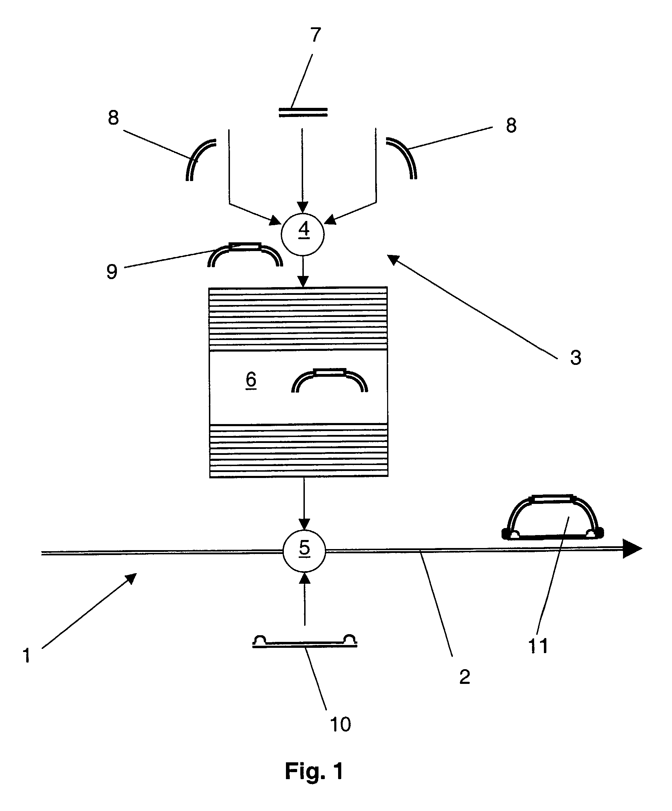

In Fig. 1 ist schematisch eine Fertigungslinie 1 zum Fügen einer Rohkarosserie 11 dargestellt, die in diesem Beispiel aus einer Hauptlinie 2 und einer Nebenlinie 3 besteht. In der Nebenlinie 3 werden in einer Nebenfügestation 4 eine linke und eine rechte Seitenwandbaugruppe 8 und eine Dachbaugruppe 7 zu einer Dach-Seitenwandbaugruppe 9 gefügt.
Die einzelnen Baugruppen 8, 7 werden dabei mit bekannten Methoden in die Nebenfügestation 4 gefördert, z.B. durch geeignete Förderstrecken oder Roboter, und werden in dieser mit hinlänglich bekannten Methoden, z.B. mittels Spannrahmen und der Framingtechnik, mit gängigen Fügeverfahren, z.B. laser- oder plasmageschweißt, wobei sowohl das Punktschweißen als auch das Schweißen von kurzen Steps denkbar ist, gefügt. Für die Erfindung ist es dabei unerheblich wie eine Seitenwandbaugruppe 8 oder eine Dachbaugruppe 7 hergestellt wird, dies könnte z.B. in eigenen vorgelagerten Fügelinien geschehen, oder die Baugruppen könnten genauso gut als fertige Baugruppen angeliefert werden.
Die fertig gefügten Dach-Seitenwandbaugruppen 9 werden in Folge in einem Entkopplungsspeicher 6 abgelegt und können bei Bedarf aus diesem wieder entnommen werden.
In der Hauptlinie 2 ist nun eine Rohkarosseriefügestation 5 angeordnet, die zum Einen aus dem Entkopplungsspeicher 6, wiederum wie oben mit gängigen Methoden, eine Dach-Seitenwandbaugruppe 9 entnimmt und in die zum Anderen, wiederum mit bekannten Methoden, eine Bodenbaugruppe 10 gefördert wird, die in der Rohkarosseriefügestation 5 zu einer Rohkarosserie 11 gefügt werden. Die fertig gefügte Rohkarosserie 11 kann dann einer weiteren Fertigung zugeführt werden.

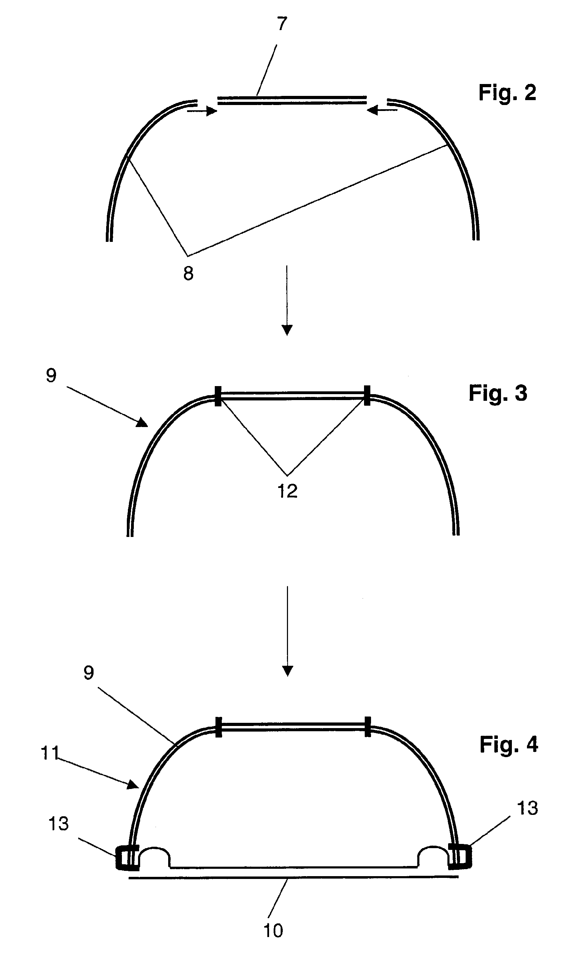

In Fig. 2 wird schematisch das Fügen der Dach-Seitenwandbaugruppen 9 gezeigt. Die linke und die rechte Seitenwandbaugruppe 8 wird in der Nebenfügestation 4 z.B. mittels hier nicht dargestellter Spannrahmen mit der Dachbaugruppe 7 verspannt und anschließend mittels ebenfalls nicht dargestellter Fügeeinrichtungen, wie z.B. ein Schweißroboter, gefügt. Die Nebenfügestation 4 verlässt somit eine an mehreren Fügestellen 12 fertig gefügte Dach-Seitenwandbaugruppe 9, wie in Fig. 3 dargestellt.

In der Rohkarosseriefügestation 5 wird nun, wie in Fig. 4 gezeigt, eine Dach-Seitenwandbaugruppe 9 mit einer Bodengruppe 10 verbunden. Dabei kommen kleine Spannrahmen 13 zum Einsatz, die die beiden Baugruppen an geeigneten Stellen spannen. Die Spannrahmen 13 können dabei auch so ausgeführt sein, dass durch eine geeignete, nicht dargestellte Ausgleichseinrichtung, z.B. flexible Spannelemente am Spannrahmen 13, Toleranzungenauigkeiten der Bodengruppe 10 und/oder der Dach-Seitenwandbaugruppe 9 ausgeglichen werden, indem beispielsweise die Nachgiebigkeit der Seitenwände genutzt wird. Zum Fügen können natürlich wiederum beliebige Fügeverfahren, wie z.B. ein geeignetes Schweiß- oder Löt- oder Klebeverfahren, zum Einsatz kommen.

Dieses Ausführungsbeispiel ist keinesfalls einschränkend, sondern es sind eine Vielzahl von möglichen Ausgestaltungen der Erfindung denkbar, die allesamt durch diese Anmeldung umfasst sind.
Insbesondere könnte man z.B. auf einen Entkopplungsspeicher 6 verzichten und die Neben-3 und Hauptlinie 2 zueinander synchron betreiben, sodass die Dach-Seitenwandbaugruppen 9 für die Weiterverwendung in der Hauptlinie 2 _{"}just-in-time" gefertigt werden.

Unter einer Seitenwandbaugruppe 8 wird in der Regel eine Baugruppe aus einem äußerem und einem inneren Blech verstanden. Allerdings kann eine Seitenwandbaugruppe 8 selbstverständlich auch aus nur einem Blech, z.B. nur aus einem inneren Blech, oder aber auch aus mehr als zwei Bleche bestehen, was am grundlegenden Erfindungsgedanken natürlich nichts ändert.

## Patentansprüche

1. Verfahren zum Fügen von Karosseriebaugruppen eines Fahrzeuges, **dadurch gekennzeichnet, dass** als Zwischenschritt zumindest eine Dachbaugruppe (7) mit zumindest einer Seitenwandbaugruppe (8) zu einer Dach-Seitenwandbaugruppe (9) gefügt wird.

2. Verfahren nach Anspruch 1, **dadurch gekennzeichnet, dass** die Dach-Seitenwandbaugruppe (9) im Anschluss mit einer Bodenbaugruppe (10) zu einer Rohkarosserie (11) gefügt wird.

3. Verfahren nach Anspruch 2, **dadurch gekennzeichnet, dass** die Dach-Seitenwandbaugruppen (9) in einer Nebenlinie (3) entkoppelt vom Fügen der Rohkarosserien (11) in einer Hauptlinie (2) gefügt werden.

4. Verfahren nach Anspruch 2 oder 3, **dadurch gekennzeichnet, dass** Toleranzungenauigkeiten der Bodenbaugruppe (10) und/oder der Dach-Seitenwandbaugruppen (9) beim Fügen der Rohkarosserie durch die Dach-Seitenwandbaugruppen (9) ausgeglichen werden.

5. Fertigungslinie zum Fügen von Karosseriebaugruppen eines Fahrzeuges zu einer Rohkarosserie (11), **dadurch gekennzeichnet, dass** zumindest eine Nebenfügestation (4) vorgesehen ist, in der Dachbaugruppen (7) mit Seitenwandbaugruppen (8) zu Dach-Seitenwandbaugruppen (9) fügbar sind.

6. Fertigungslinie nach Anspruch 5, **dadurch gekennzeichnet, dass** die Nebenfügestation (4) in einer Nebenlinie (3) angeordnet ist.

7. Fertigungslinie nach Anspruch 5 oder 6, **dadurch gekennzeichnet, dass** die gefügten Dach-Seitenwandbaugruppen (9) in zumindest einem Entkopplungsspeicher (6) zwischenspeicherbar sind.

8. Fertigungslinie nach Anspruch 5 oder 6, **dadurch gekennzeichnet, dass** in einer Hauptlinie (2) zumindest eine Rohkarosseriefügestation (5) vorgesehen ist, in der die vorgefügten Dach-Seitenwandbaugruppen (9) mit einer Bodenbaugruppe (10) zu einer Rohkarosserie (11) fügbar sind.

9. Fertigungslinie nach Anspruch 7, **dadurch gekennzeichnet, dass** in einer Hauptlinie (2) zumindest eine Rohkarosseriefügestation (5) vorgesehen ist, in der die vorgefügten Dach-Seitenwandbaugruppen (9) mit einer Bodenbaugruppe (10) zu einer Rohkarosserie (11) fügbar sind, wobei zum Fügen der Rohkarosserie (11) in der Hauptlinie (2) eine Dach-Seitenwandbaugruppen (9) mittels einer Handhabungseinrichtung aus dem Entkopplungsspeicher (6) entnehmbar und in die Rohkarosseriefügestation (5) zuführbar ist.

10. Fertigungslinie nach einem der Ansprüche 5 bis 9, **dadurch gekennzeichnet, dass** in der Nebenfügestation (4) und/oder der Rohkarosseriefügestation (9) zumindest ein Spannrahmen (13) angeordnet ist, welcher die zu fügenden Baugruppen in einer zum Fügen geeigneten Position hält und/oder spannt.

11. Fertigungslinie nach Anspruch 8 oder 9, **dadurch gekennzeichnet, dass** die Rohkarosseriefügestation (5) beim Fügen einer Dach-Seitenwandbaugruppen (9) mit einer Bodenbaugruppe (10) zum Ausgleichen von Toleranzungenauigkeiten der Bodenbaugruppe (10) und/oder der Dach-Seitenwandbaugruppen (9) ausgeführt ist.

12. Fertigungslinie nach Anspruch 11, **dadurch gekennzeichnet, dass** in der Rohkarosseriefügestation (5) zumindest ein Spannrahmen (13) vorgesehen ist, der Ausgleichseinrichtungen aufweist, mit denen beim Spannen bzw. Fügen einer Dach-Seitenwandbaugruppe (9) mit einer Bodenbaugruppe (10) Toleranzungenauigkeiten der Bodenbauruppe (10) und/oder der Dach-Seitenwandbaugruppen (9) ausgleichbar sind.
